# EUROPÄISCHE PATENTSCHRIFT

(11) **EP 1 360 820 B1**
(45) Veröffentlichungstag und Bekanntmachung des Hinweises auf die Patenterteilung: **23.09.2009**
(21) Anmeldenummer: 02706623.2
(22) Anmeldetag: 23.01.2002
(51) Int. Cl.: H04L 29/12

(54) **VERFAHREN UND ANORDNUNG ZUM ERMITTELN DER VIRTUELLEN ADRESSE EINES ENDGERÄTES**
METHOD AND ARRAY FOR DETERMINING THE VIRTUAL ADDRESS OF A TERMINAL
PROCEDE ET DISPOSITIF POUR DETERMINER L'ADRESSE VIRTUELLE D'UN TERMINAL

(30) Priorität: 13.02.2001 DE 10106586; 02.10.2001 DE 10148627
(43) Veröffentlichungstag der Anmeldung: 12.11.2003
(73) Patentinhaber: SIEMENS AKTIENGESELLSCHAFT, 80333 München (DE)
(72) Erfinder: MENDISCH, Volker, 82223 Eichenau (DE); HELD, Walter, 82538 Geretsried (DE)
(86) Internationale Anmeldenummer: PCT/DE2002/000223
(87) Internationale Veröffentlichungsnummer: WO 2002/065725

(56) Entgegenhaltungen:
- WO-A-96/39769
- US-A- 6 012 088
- US-A- 6 073 178

## Beschreibung

Die Erfindung betrifft ein Verfahren zum Ermitteln einer virtuellen Adresse, die einer teilnehmerseitig über eine Endgeräteschnittstelle und eine Netzabschlußeinheit an ein virtuelles Netz angeschlossenen Endgeräteeinheit zuordenbar ist, und eine für ein solche Verfahren geeignete Anordnung.

Das derzeit bekannteste virtuelle Netz, in dem virtuelle Adressen verwendet werden, ist das Internetprotokollnetz oder IP-Netz. In einem IP-Netz (englisch: IP NETWORK) also in einem Netz, das das TCP/IP-Protokoll verwendet, benötigt jede Netzeinrichtung bis hin zu den Endgeräteeinheiten eine eindeutige virtuelle Adresse, die Internetprotokolladresse oder IP-Adresse. Eine IP-Adresse, die aus einer Netzadresse und einer Geräteadresse erstellt wird, besteht in der IP Version 4 (Ipv4) aus vier Zahlen (Oktetten), die jeweils durch einen Punkt getrennt sind, zum Beispiel 75.214.64.2. In späteren IP Versionen werden mehr Oktetten für die IP-Adresse verwendet. IP-Adressen können manuell erstellt werden und den Netzein"richtung einschließlich der Endgeräteeinheiten in einem Netz fest zugeordnet werden. Die IP-Adresse einer Netzeinrichtung ist erforderlich, um Informationen via Internetprotokoll gezielt zu dieser Netzeinrichtung übermitteln zu können. Eine manuelle Konfiguration eines IP-Netzes ist jedoch aufwendig und nur für kleinere, selten veränderte Teilnetze interessant.

Zur Automatisierung der IP-Adressenzuordnung verwenden Netzbetreiber daher üblicherweise ein sogenanntes BOOTSTRAP-Protokoll BOOTP oder ein dynamisches Host-Konfigurierungsprotokoll (englisch: DYNAMIC HOST CONFIGURATION PROTOCOL) DHCP. BOOTP ist ein TCP/IP-Protokoll, mit dessen Hilfe Netzeinrichtungen ihre IP-Adresse oder andere Netzinformationen, wie Server-Adressen und Gateway-Informationen ermitteln können. Beim Starten einer Netzeinrichtung wird von dieser in einem UDP-Paket (englisch: USER DATA PROTOCOL, ein nicht zuverlässiges Protokoll aus der TCP/IP-Protokoll-Suite) eine Anfrage BOOT-REQUEST an den BOOTP-Server übermittelt, der die benötigte IP-Adresse mit einer Meldung BOOT-RESPONSE zurücksendet. Hierbei verwenden die BOOT-REQUEST- und BOOT-RESPONSE-Meldungen eine IP-Rundsendefunktion (IP BROADCAST), mit der Meldungen gesendet werden können, bevor die spezifische IP-Adresse bekannt ist. Ein solches Verfahren ist beispielsweise in der US 6,115,545 im Detail beschrieben.

DHCP ist ebenfalls eine Software zum automatischen Zuteilen von IP-Adressen an Netzeinrichtung, die in einem TCP/IP-Netz einloggen. DHCP-Software läuft üblicherweise auf Servern und ein solcher DHCP-Server ist beispielsweise in US 5,884,024 beschrieben.

BOOTP-Server oder DHCP-Server benötigen zum Vergeben einer IP-Adresse eine Hardware-Adresse einer Netzeinrichtung, die von der Netzschnittstelle dieser Netzeinrichtung in der IP-Adressenanfragemeldung, z.B. BOOT-REQUEST, zum entsprechenden Server übermittelt wird.

In Netzen nach dem ETHERNET-Standard wird die Hardware-Adresse (MAC-Adresse) der die teilnehmerseitige Netzabschlußeinheit an einer Netzschnittstelle in Bus-Struktur-Datennetzen bildenden Ethernet-Karte als eindeutig zuordenbare Kennung für jede IP-Adressenanfrage und IP-Adressenantwort (BOOT-REQUEST, BOOT-RESPONSE) verwendet.

In Telekommunikationsnetzen, die Teil eines IP-Netzes sind, wird meist eine Hardwareadresse der teilnehmerseitigen Netzschnittstelle einer Netzeinrichtung als eindeutig zuordenbare Kennung für jede IP-Adressenanfrage und IP-Adressenantwort (BOOT-REQUEST, BOOT-RESPONSE) dieser Netzeinrichtung verwendet. Eine solche Pseudo-Hardwareadresse muß hierbei auf der Teilnehmerseite nicht unbedingt der Endgeräteanordnung zugeordnet sein, sondern kann auf Grund der zusätzlich wirksamen Vermittlungstechnik des Telekommunikationsnetzes auch dem Teilnehmeranschluß oder einer teilnehmerseitigen Netzabschlußeinheit zugeordnet werden. Sind auf der Teilnehmerseite einer solchen Netzabschlußeinheit mehrere Endgeräteeinheiten jeweils über eigene Telekommunikationsschnittstellen angeschlossen, so benötigen diese jeweils eine eigene IP-Adresse.

Eine solche Netzabschlußeinheit eines Telekommunikationsnetzes, die ein IP-Netz auf der Teilnehmerseite des Teilnehmeranschlusses eines Telekommunikationsnetzes abschließt, dient zum Multiplexen verschiedener Kommunikationstechniken auf der Teilnehmerseite auf einen einzelnen Telekommunikationsnetzanschluß und zum Demultiplexen der vom Netz kommenden Datenströme in die zugehörigen Kanäle. Bekannte solche Netzabschlußeinheiten werden häufig nach dem englischsprachigen Begriff INTEGRATED ACCESS DEVICE als IAD bezeichnet. Ein Telekommunikationsnetzanschluß zum Anschließen eines IAD kann ein analoger Telefonanschluß sein, aber auch ein ISDN-Anschluß, ein DSL-Anschluß oder ein T1-Anschluß. Ein IAD kann hierbei auch Teil einer Kommunikationsnebenstellenanlage sein, die teilnehmerseitig eine Vielzahl von ISDN-S0-Busanschlüssen oder POTS-Teilnehmeranschlußeinheiten zur Verfügung stellt. Solche Kommunikationsnebenstellenanlage werden auch TK-Anlage oder PBX genannt ( englisch: Private Branch Exchange). Die derzeit häufigste Anwendung von IAD-Einheiten ist das Multiplexen von Sprache und Daten über einen DSL-Anschluß. DSL (englisch: DIGITAL SUBSCRIBER LINE) bezeichnet einen digitalen Teilnehmeranschluß, der nicht wie ein ISDN-Anschluß vermittlungstechnisch aktiviert wird, sondern dauerhaft angeschlossen ist und über eine zentrale Netzeinrichtung, einen Teilnehmeranschlußleitungszugangsmultiplexer DSLAM (englisch: DSL ACCESS MULTIPLEXER) mit Sprachinformation und Dateninformation versorgt wird. Von einem solchen DSLAM, der meist Teil eines peripheren Netzknotens ist, gehen die digitalen Teilnehmeranschlußleitungen DSL eines bestimmten lokalen Bereiches aus und oft ist für jede Teilnehmeranschlußleitung in dem DSLAM ein spezifischer Teilnehmeranschlußdatensatz (englisch: Port, data) gespeichert und von einem zentralen Netzmanagement konfigurierbar.

Zum zentralen Managen von Netzeinrichtung wie z.B. DSLAMs oder IADs in einem IP-Netz, kann ein Netzbetreiber beispielsweise SNMP über IP nutzen. SNMP steht für den englischsprachigen Ausdruck SIMPLE NETWORK MANAGEMENT PROTOCOL. Hierbei handelt es sich um ein weit verbreitetes Netzbeobachtungs- und Steuerprotokoll. Um eine Netzeinrichtung zu managen, muß der Netzbetreiber der zugeordneten Netzmanagementschnittstelle eine statische IP-Adresse zuordnen, die zum Austausch von Netzmanagementmeldungen verwendet werden kann. Darüber hinaus müssen auch die IP-Router und das Netzmanagementsystem innerhalb des IP-Netzes des Netzbetreibers diese IP-Adresse kennen. Hierzu verwenden Netzbetreiber eines der Protokolle BOOTP oder DHCP in oben erwähnter Weise. Die eindeutige Kennung zum Festlegen einer IP-Adresse in einem BOOTP-Server oder DHCP-Server ist meist die Hardware-Adresse der Netzeinrichtung. Die entsprechende IP-Adresse wird, da sie für Netzmanagementzwecke verwendbar ist, auch Management-IP-Adresse genannt.

Beim Einrichten einer Netzeinrichtung muß der Netzbetreiber die erforderliche Information im BOOTP-Server mit der Hardware-Adresse der Internetprotokollschnittstelle der entsprechenden Netzanordnung der verwendeten Netzeinrichtung und deren zuzuordnender IP-Adresse eingeben. Bei teilnehmerseitigen, vom Teilnehmer über eine Telekommunikationsendgeräteschnittstelle wie einen DSL-Anschluß, einen ISDN S0-Bus oder eine POTS Teilnehmeranschlußeinheit an eine IAD-Einheit anzuschließenden Endgeräteeinheiten ist hierzu entweder die manuelle Eingabe der exakten Hardware-Adresse der Endgeräteeinheit durch den Teilnehmer vor dem Einrichten erforderlich, oder der Teilnehmer muß die Hardware-Adresse via Telefon oder Post beim Netzbetreiber registrieren, nachdem die Endgeräte-einheit beim Teilnehmer eingerichtet worden ist. Häufig werden IP-Endgeräteeinheiten teilnehmerseitig über Telekommunikationsschnittstellen wie ISDN S0-Busanschlüsse oder POTS Teilnehmeranschlußeinheiten über eine IAD-Einheit und z.B. über ein Telekommunikationsnetz an ein IP-Netz angeschlossen. (POTS steht für Plain Old'Telecommuniation System und bezeichnet Analogleitungstelefonie bzw. Datenübertragung gemäß einem Analogleitungs-Modemstandard wie V.90). In einem solchen Fall ist eine Registrierung der Hardware-Adresse der Endgeräteeinheit durch den Teilnehmer die derzeit einzige Lösung. Die beiden erwähnten Möglichkeiten der Registrierung sind sehr arbeitsaufwendig, erfordern Koordination zwischen Teilnehmer und Netzbetreiber, sind fehleranfällig und können zu ungewünschten Verzögerungen der Diensteverfügbarkeit führen, nachdem die Endgeräteeinheit beim Teilnehmer installiert worden ist. Außerdem muß der Teilnehmer jedes einzelne Endgerät, das über einen solchen S0-Busanschluß oder eine solche POTS Teilnehmeranschlußeinheit angeschlossen werden soll, bei dem zentralen IP-Netzmanagement registrieren. Eine solche Endgeräteeinheit kann beispielsweise ein H.323-Videotelefon sein mit einer an die Teilnehmeranschlußleitung angepaßten Kommunikationsschnittstelle. Es kann sich auch um einen Computer, ein Fax oder ein IP-Telefon mit entsprechender Kommunikationsschnittstelle handeln.

In der Patentschrift US 6,012,088 ist ein Internet Access Device offenbart, das sich nach lokaler Eingabe einer Telephonnummer und einer Registrationsidentifikation automatisch mit dem Internet verbindet und von einem Server kundenspezifische Einstellungen lädt.

In der Offenlegungsschrift WO 96/39769 ist ein Mechanismus zum Ermitteln und Senden von Kennungen offenbart.

Aufgabe der Erfindung ist es, ein vorteilhafteres Verfahren zum Zuordnen von virtuellen Adressen für über Endgeräteschnittstellen und eine Netzabschlußeinheit an ein IP-Netz anzuschließende Endgeräteeinheiten anzugeben sowie hierzu geeignete Anordnungen.

Ein erstes erfindungsgemäßes Verfahren zum Ermitteln einer virtuellen Adresse, die einem über einen Endgeräteanschluß und eine teilnehmerseitige Netzabschlußeinheit eines virtuellen Netzes angeschlossenen teilnehmerseitigen Endgeräteeinheit eindeutig zugeordnet ist, hat folgende Verfahrensschritte:
- Eine Netzabschlußeinheit sendet eine Adreßanforderungsmeldung mit einer eindeutigen Kennung der Netzabschlußeinheit an eine Netzmanagementeinheit zum Zuweisen von virtuellen Adressen, um die virtuelle Adresse der Netzabschlußeinheit anzufordern,
- die Netzmanagementeinheit weist der Netzabschlußeinheit die virtuelle Adresse unter Verwendung der genannten Kennung zu,
- die Netzmanagementeinheit sendet diese virtuelle Adresse der Netzabschlußeinheit und eine eindeutige zweite Kennung des Nachgeordneten Endgeräteanschlusses zur Netzabschlußeinheit,
- die Netzabschlußeinheit sendet eine Adreßanforderungsmeldung mit der eindeutigen zweiten Kennung des Nachgeordneten Endgeräteanschlusses an die Netzmanagementeinheit zum Zuweisen von virtuellen Adressen;
- die Netzmanagementeinheit weist dem nachgeordneten Endgeräteanschluß die zweite virtuelle Adresse unter Verwendung der genannten zweiten Kennung zu,
- die Netzmanagementeinheit sendet diese zweite virtuelle Adresse des Nachgeordneten Endgeräteanschlusses zu der Netzabschlußeinheit,
- diese zweite virtuellen Adresse des Nachgeordneten Endgeräteanschlusses wird als virtuelle Adresse für die Endgeräteeinheit an die Endgeräteeinheit übermittelt. Ein zweites erfindungsgemäßes Verfahren zum Ermitteln einer virtuellen Adresse, die einem über einen Endgeräteanschluß und eine teilnehmerseitige Netzabschlußeinheit eines virtuellen Netzes angeschlossenen teilnehmerseitigen Endgeräteeinheit eindeutig zugeordnet ist, hat folgende Verfahrensschritte:

- Eine Netzabschlußeinheit sendet eine Adreßanforderungsmeldung mit einer eindeutigen Kennung der Netzabschlußeinheit an eine Netzmanagementeinheit zum Zuweisen von virtuellen Adressen, um die virtuelle Adresse der Netzabschlußeinheit anzufordern,
- die Netzmanagementeinheit weist der Netzabschlußeinheit die virtuelle Adresse unter Verwendung der ihr zugeordneten ersten Kennung zu,
- die Netzmanagementeinheit sendet diese virtuelle Adresse der Netzabschlußeinheit und eine eindeutige zweiten Kennung des Nachgeordneten Endgeräteanschlusses zur Netzabschlußeinheit,
- die eindeutige Kennung des Nachgeordneten Endgeräteanschlusses wird zur teilnehmerseitigen Endgeräteeinheit übermittelt,
- die teilnehmerseitige Endgeräteeinheit sendet eine Adreßanforderungsmeldung mit der eindeutigen zweiten Kennung des nachgeordneten Endgeräteanschlusses an die Netzmanagementeinheit zum Zuweisen von virtuellen Adressen;
- die Netzmanagementeinheit weist dem nachgeordneten Endgeräteanschluß die zweite virtuelle Adresse unter Verwendung der genannten zweiten Kennung zu,
- die Netzmanagementeinheit sendet diese zweite virtuelle Adresse des Nachgeordneten Endgeräteanschlusses zu der teilnehmerseitigen Endgeräteeinheit,
- diese zweite virtuellen Adresse des Nachgeordneten Endgeräteanschlusses wird als virtuelle Adresse für die Endgeräteeinheit übernommen.

Die Netzabschlußeinheit fordert mit der Adreßanforderungsmeldung mit ihrer eigenen Kennung von der Netzmanagementeinheit zum Zuweisen von virtuellen Adressen ihre eigene virtuelle Adresse an. Da die Netzabschlußeinheit keine Endeinrichtung ist, wird deren virtuelle Adressen nur für Zwecke des Netzmanagements benötigt. Falls das virtuells Netz ein IP-Netz ist, wird eine solche IP-Adresse daher auch Management-IP-Adresse genannt. Mit dieser virtuellen Adresse der Netzabschlußeinheit sendet die Netzmanagementeinheit zum Zuweisen von virtuellen Adressen auch eine eindeutige Kennung des Endgeräteanschlusses zur Netzabschlußeinheit. Da diese Kennung dem Endgeräteanschluß und nicht der Endgeräteeinheit zugeordnet ist, ist eine Konfiguration des aus Netzabschlußeinheit, Endgeräteanschluß und Endgeräteeinheit bestehenden teilnehmerseitigen Sub-Netzes in einer zentralen Netzmamagementeinrichtung unabhängig von einer speziellen Endgeräteeinheit möglich. Hierbei ist es in einer Weiterbildung der Erfindung insbesondere möglich, ein solches teilnehmerseitiges Sub-Netz mit einer Vielzahl von Endgeräteanschlüssen vorzusehen und der Netzabschlußeinheit gemeinsam mit Ihrer eigenen virtuellen Adresse für jeden dieser Endgeräteanschlüsse eine eindeutige Hardware-Kennung, beispielsweise eine Pseudo-Media-Access-Control(MAC)-Adresse in dem Format entsprechend dem IEEE-Standard 802, zuzusenden.

Eine günstige Ausgestaltungsform einer für ein Erfindungsgemäßes Verfahren verwendbaren Netzabschlußeinheit sieht eine Speicheranordnung vor, um von der Netzmanagementeinheit zum Vergeben von virtuellen Adressen empfangene zweite Kennungen der ihr teilnehmerseitig nachgeordneten Endgeräteanschlüsse zu speichern. Eine solche gespeicherte zweite Kennung kann dann beispielsweise von der Netzabschlußeinheit zu der jeweiligen an einem dieser Endgeräteanschlüsse angeschlossenen Endgeräteeinheit übermittelt werden und von dieser Endgeräteeinheit als spezifische zweite Kennung übernommen werden. Im Falle einer solchen Konstellation kann eine solche Endgeräteeinheit gemäß dem oben beschriebenen zweiten erfindungsgemäßen Verfahren eine Adreßanforderungsmeldung mit dieser eindeutigen Kennung des Endgeräteanschlusses an die Netzmanagementeinheit zum Zuweisen von IP-Adressen senden. Geeignete Endgeräteeinheiten müssen die Übernahme von nicht fest eingegebenen Kennungen, also das nachträgliche Eintragen einer Pseudo-MAC-Adresse, zulassen.

Eine weitere günstige Ausgestaltungsform einer für ein Erfindungsgemäßes Verfahren verwendbaren Netzabschlußeinheit sieht vor, für jeden der ihr teilnehmerseitig nachgeordneten Endgeräteanschlüsse eine Adreßanforderungsmeldung mit der entsprechenden eindeutigen zweiten Kennung dieses Endgeräteanschlusses an die Netzmanagementeinheit zum Zuweisen von virtuellen Adressen zu senden.

Eine hierzu geeignete Netzabschlußeinheit hat eine Kommunikationsschnittstelle zum Anschließen über eine Teilnehmeranschlußleitung eines Telekommunikationsnetzes an ein virtuelles Netz, eine Kennungsspeicheranordnung zum Speichern ihrer eigenen ersten eindeutigen Kennnung und eine Steuerung. Diese Steuerung dient dem Senden einer Adreßanforderungsmeldung unter Verwendung der gespeicherten ersten Kennung über die Kommunikationsschnittstelle, dem Empfangen einer ersten virtuellen Adresse der Netzabschlußeinheit und einer eindeutigen zweiten Kennung eines teilnehmerseitig mit der Netzabschlußeinheit verbundenen Endgeräteanschlusses, dem Senden einer Adreßanforderungsmeldung unter Verwendung dieser eindeutigen zweiten Kennung des Endgeräteanschlusses über die Kommunikationsschnittstelle, dem Empfangen einer virtuellen zweiten Adresse des Endgeräteanschlusses und dem Übermitteln der virtuellen zweiten Adresse des Endgeräteanschlusses zu einer an diesem Endgeräteanschluß angeschlossenen Endgeräteeinheit.

Eine solche Netzabschlußeinheit hat vorzugsweise eine Seicheranordnung, um von der Netzmanagementeinheit empfangene virtuelle zweite Adressen der ihr teilnehmerseitig nachgeordneten Telekommunikationsendgeräteanschlüsse zu speichern. In einem solchen Falle können die virtuellen zweiten Adressen für alle Endgeräteanschlüsse beim Initialisieren der Netzabschlußeinheit ermittelt werden und an diesen Endgeräteanschlüssen angeschlossenen Endgeräten bedarfsweise, z.B. bei nachträglichem Anschließen, übermittelt werden. Auch im Falle eines Endgerätewechsels an einem Endgeräteanschluß kann dem dann angeschlossenen Endgerät unmittelbar seine für den Endgeräteanschluß vergebene virtuelle zweite Adresse übermittelt werden. Falls eine ältere Endgeräteeinheit verwendet werden sollte, kann hierbei die für den Endgeräteanschluß vergebene virtuelle Adresse teilnehmerseitig als feste virtuelle Adresse der Endgeräteeinheit konfiguriert werden.

Eine für ein erfindungsgemäßes Verfahren besonders geeignete Netzmanagementeinheit zum Zuweisen von virtuellen Adressen hat eine
Speichereinrichtung zum Speichern von ersten und zweiten Kennungen, die Netzelementen eindeutig zugeordnet sind, zum Speichern von diesen ersten und zweiten Kennungen zugeordneten ersten und zweiten virtuellen Adressen und zum zugeordneten Speichern von einer solchen ersten Kennung zugeordneten zweiten Kennungen. Darüber hinaus hat eine solche Netzmanagementeinheit eine Steuerung zum Empfangen einer solchen ersten Kennung einer Netzeinrichtung enthaltenden Adreßanforderungsmeldung von dieser Netzeinrichtung, zum Ermitteln der dieser ersten Kennung zugeordneten ersten virtuellen Adresse und der dieser ersten Kennung zugeordneten zweiten Kennungen und zum Senden dieser ersten virtuellen Adresse und dieser zweiten Kennungen an die entsprechende Netzeinrichtung.

Bekannte Netzmanagementeinheit eines IP-Netzes zum Zuweisen von IP-Adressen übermitteln einer Netzeinrichtung, von der sie eine IP-Adreßanforderungsmeldung erhalten, neben der in der Anforderungsmeldung enthaltenen Kennung und der angeforderten IP-Adresse nur Informationen bezüglich Netzelementen, die zwischen der Netzmanagementeinheit und der anfragenden Netzeinrichtung vorgesehen sind. Eine erfindungsgemäße Netzmanagementeinheit übermittelt hingegen auch eine Kennung einer der Netzeinrichtung teilnehmerseitig nachgeordneten Einheit. Hierzu muß für den Fall des Internetprotokolls das derzeitige BOOT-Protokoll um einen geeigneten Parameter in der Antwortnachricht von der NME erweitert werden.

Die eindeutige Kennung der Netzabschlußeinheit ist beispielsweise die Hardware-oder MAC-Adresse dieser Netzabschlußeinheit. Falls die Netzabschlußeinheit des virtuellen Netzes eine über einen Teilnehmeranschluß eines Telekommunikationsnetztes an das virtuelle Netz angeschlossene Netzabschlußeinheit ist, kann die eindeutige Kennung der Netzabschlußeinheit, wie oben erwähnt, auch eine Pseudo-Hardwareadresse sein, die dem Teilnehmeranschluß dieser Netzabschlußeinheit zugeordnet ist. Eine solche Pseudo-Hardwareadresse des Teilnehmeranschlusses kann beipielsweise beim Konfigurieren dieses Teilnehmeranschlusses im netzseitigen Peripheriebereich des Telekommunikationsnetztes gespeichert werden und beim Initialisieren der Netzabschlußeinheit über die Teilnehmeranschlußleitung zur Netzabschlußeinheit übermittelt werden. Ein solches Vorgehen hat den Vorteil, daß die erste virtuelle Adresse der Netzabschlußeinheit geräteunabhängig konfiguriert werden kann.

Eine besonders günstige Ausgestaltung eines erfindungsgemäßen Verfahrens sieht als die eindeutige Kennung eines oder mehrerer Endgeräteanschlüsse für jeden dieser Endgeräteanschlüsse jeweils eine ihm zugeordnete Pseudo-Hardwareadresse vor. Diese Ausgestaltung ist anwendbar, wenn die Endgeräteanschlüsse unabhängig von der virtuellen Adresse adressierbar sind, also beispielsweise, wenn es sich um verbindungsorientierte Telekommunikationsendgeräteanschlüsse handelt. Diese Pseudo-Hardwareadresse ist zusätzlich zur ersten virtuellen Adresse der Netzabschlußeinheit als zur eindeutigen Kennung der Netzabschlußeinheit gehörig in der Netzmanagementeinheit zum Vergeben von virtuellen Adressen gespeichert, um im Falle einer die Kennung der Netzabschlußeinheit enthaltenden Adressanforderungsmeldung zusätzlich zur ersten virtuellen Adresse der Netzabschlußeinheit an die Netzabschlußeinheit gesendet zu werden. In diesem Falle können alle teilnehmerseitig erforderlichen virtuellen Adressen bei der Konfiguration der Netzabschlußeinheit im virtuellen Netz festgelegt werden. Die Hardwareadressen einzelner Endgeräte sind nicht erforderlich. Die Anzahl und die Adressierung der einer Netzabschlußeinheit teilnehmerseitig nachgeordneten Telekommunikationsendgeräteanschlüsse stehen bei der Inbetriebnahme eines teilnehmerseitigen Subnetzes fest und bleiben üblicherweise über einen längeren Zeitraum konstant.

Falls einer Netzabschlußeinheit teilnehmerseitig mehrere Endgeräteanschlüsse zum Anschließen von Endgeräteeinheiten des virtuellen Netzes nachgeordnet sind, werden gemäß einer Weiterbildung eines erfindungsgemäßen Verfahrens eindeutige Kennungen dieser Endgeräteanschlüsse von der Netzmanagementeinheit zum Zuweisen von virtuellen Adressen zur Netzabschlußeinheit gesendet. Für jeden dieser Endgeräteanschlüsse wird dann eine Adreßanforderungsmeldung mit der eindeutigen Kennung des jeweiligen Endgeräteanschlusses an die Netzmanagementeinheit zum Zuweisen von virtuellen Adressen gesendet.

Es ist klar, daß die vorstehend beschriebenen Anordnungen und Verfahren besonders geeignet sind zum Ermitteln einer IP-Adresse, die einer teilnehmerseitig beispielsweise über eine Telekommunikationsendgeräteschnittstelle und eine Netzabschlußeinheit an ein IP-Netz angeschlossenen Endgeräteeinheit zuordenbar ist.

Nachstehend wird die Erfindung beispielhaft und nicht einschränkend für den Fall eines IP-Netzes mit einer über einen Teilnehmeranschluß eines Telekommunikationsnetztes an das IP-Netz angeschlossene Netzabschlußeinheit und ein nachgeordnetes teilnehmerseitiges Subnetz mit Telekommunikationsendgeräteanschlüssen anhand von besonders günstigen Ausführungsbeispielen unter Bezugnahme auf die Figuren der Zeichnung näher erläutert. Es zeigt:
Figur 1 in schematischer Blockdarstellung Komponenten eines Internetprotokollnetzes, in dem ein erfindungsgemäßes Verfahren anwendbar ist;
Figuren 2a und 2b in schematischer Darstellung den Ablauf einer besonders günstigen Ausgestaltungsform eines erfindungsgemäßen Verfahrens unter Bezugnahme auf eine Netzkonstellation gemäß Figur 1;
Figur 3 in schematischer Blockdarstellung ein Internetprotokollnetzes gemäß Figur 1 mit besonders günstiger Ausgestaltungsform einer erfindungsgemäßen Netzabschlußeinheit und mit einem Bootstrap-Protokollserver als einer besonders günstigen Ausgestaltungsform einer Netzmanagementeinheit zum Zuweisen von In-Adressen

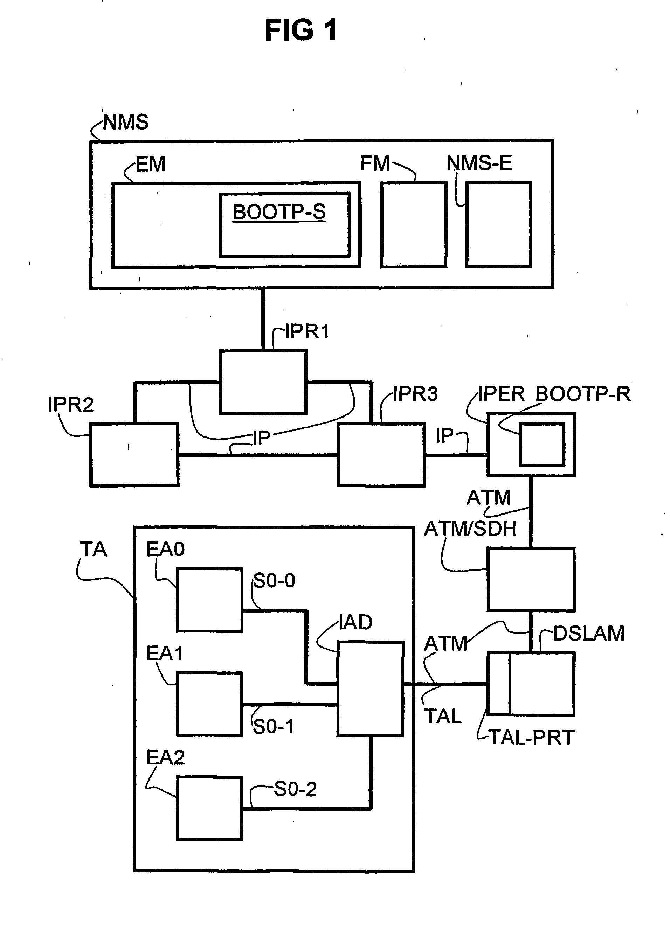

Figur 1 zeigt ein Netzmanagementsystem NMS eines Internetprotokollnetzes mit einer Elementenmanagementeinheit EM, einer Fehlermanagementeinheit FM und einer von einer Bedienperson zu bedienenden Netzmanagementsystemeingabeeinheit NMS-E. Die Elementenmanagementeinheit EM enthält neben nicht gesondert dargestellten Untereinheiten u.a. einen Bootstrap-Protokollserver BOOTP-S als Netzmanagementeinheit zum Zuweisen von IP-Adressen. Das Netzmanagementsystem NMS ist über eine LAN-Verbindung mit einem Internetprotokolldatennetz verbunden, das durch drei Internetprotokollrouter IPR1, IPR2 und IPR3 sowie einen Netzübergangsinternetprotokollrouter IPER dargestellt ist. Zwischen den Routern IPR1, IPR2, IPR3 und IPER dieses Netzbereiches wird Information auf der Basis des Internetprotokolls IP ausgetauscht.

Ein Netzübergangsinternetprotokollrouter IPER, der gemäß dem englischsprachigen Ausdruck EDGE DEVICE auch als EDGE-ROUTER bezeichnet wird, ist mit einer nicht dargestellten ATM-Karte ausgerüstet und ermöglicht somit den Übergang von dem Internetprotokollnetz in ein Telekommunikationsnetz mit Informationsaustausch auf der Basis des Asynchron-Transfer-Modus ATM. Im dargestellten Ausführungsbeispiel ist der Netzübergangsprotokollrouter IPER an ein ATM-Netz gemäß dem Standard ATM/SDH angeschlossen, zu dessen Peripheriebereich ein Teilnehmeranschlußleitungszugangsmultiplexer DSLAM gehört. Der Netzübergangsprotokollrouter IPER enthält eine Bootstrap-Protokollrelaisfunktion BOOTP-R, die unter anderem für das Zustellen von Bootstrap-Protokollmeldungen an Netzelemente DSLAM, Netzabschlußeinheiten IAD und das Netzmanagementsystem NMS zuständig ist. Da der Netzübergangsinternetprotokollrouter IPER die Funktion eines Internetprotokollrelais übernimmt, wird er auch Relaisrouter IPER genannt.

Der Teilnehmeranschlußleitungszugangsmultiplexer DSLAM hat Teilnehmeranschlußleitungsports TAL-PRT, von denen Teilnehmeranschlußleitungen TAL ausgehen. In der Figur ist nur eine Teilnehmeranschlußleitung TAL gezeigt, die mit einer Netzabschlußeinheit IAD eines teilnehmerseitigen Subnetzes TA verbunden ist. Zwischen dem Netzübergangsprotokollrouter IPER und der Netzabschlußeinheit IAD, wie auch zu jeder anderen, in der Figur nicht dargestellten Netzabschlußeinheit sind permanente virtuelle ATM-Verbindungen, sogenannte ATM-PVCs, eingerichtet. Über diese virtuellen ATM-Verbindungen können von dem Netzübergangsinternetprotokollrouter IPER zu den Netzabschlußeinheiten IAD Informationen und Steuerbefehle des Netzmanagementsystems NMS auf der Grundlage des oben erwähnten Protokolls SNMP übermittelt werden. Der Netzübergangsinternetprotokollrouter IPER hat bezüglich der Managementkanäle zwischen dem Netzmanagementsystem NMS und den Netzabschlußeinheiten IAD nur eine vermittlungstechnische Funktion.

Das in Figur 1 dargestellte teilnehmerseitigen Subnetzes TA besteht neben der Netzabschlußeinheit IAD noch aus drei Endgeräteeinheiten EA0, EA1 und EA2, die jeweils über eine S0-Schnittstelle S0-0, S0-1, S0-2 mit der Netzabschlußeinheit IAD verbunden sind.

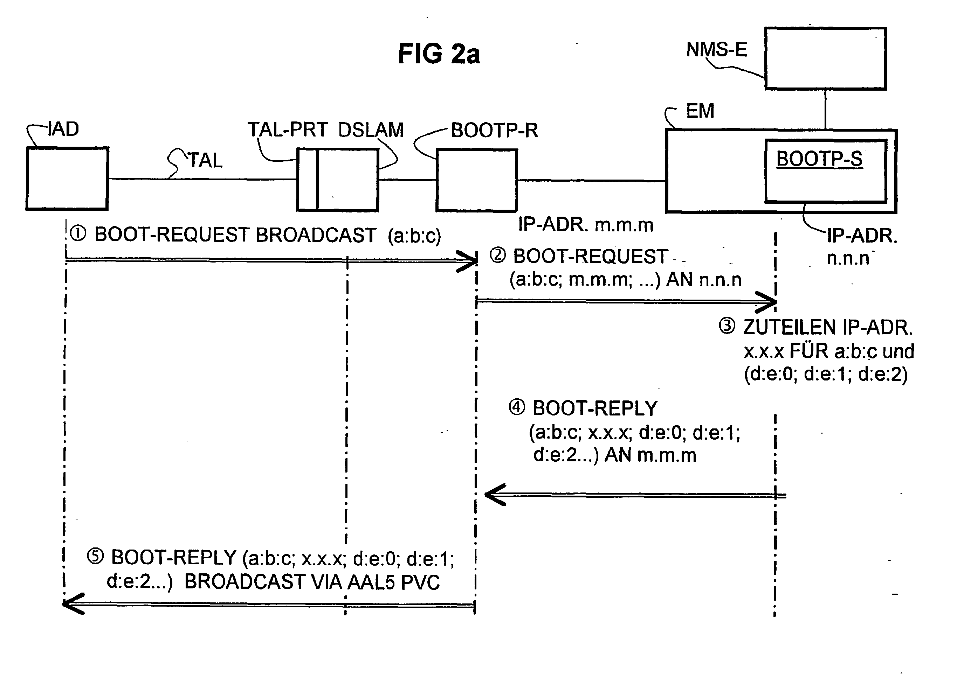

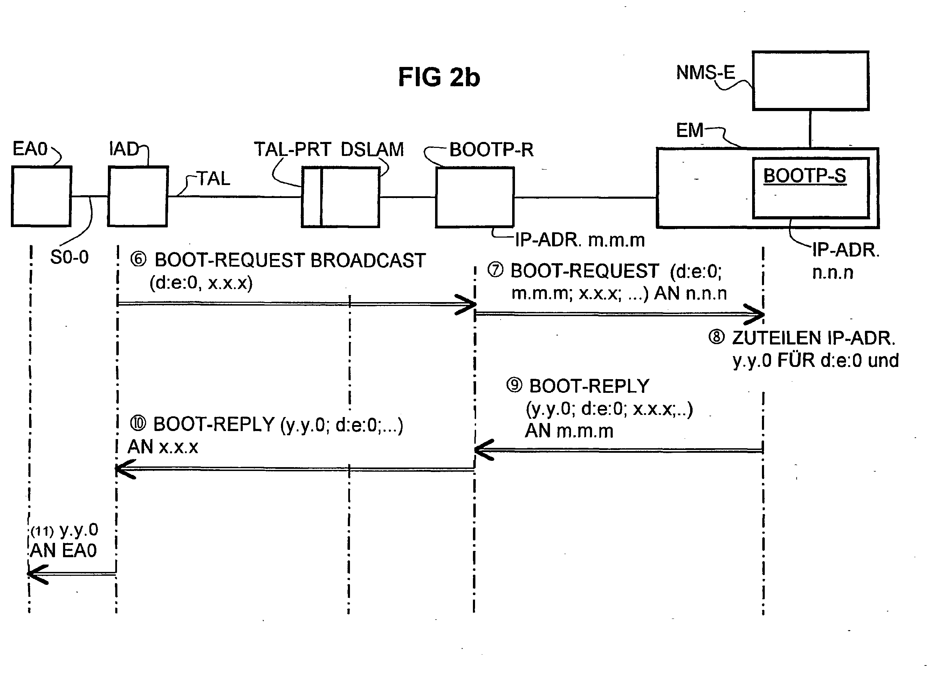

Die Figuren 2a und 2b zeigen einige Komponenten aus Figur 1, sowie Verfahrensschritte einer besonders günstigen Ausgestaltungsform eines erfindungsgemäßen Verfahrens. Im einzelnen zeigen die Figuren 2a und 2b als Funktionseinheiten die Netzmanagementsystemeingabeeinheit NMS-E, die Elementenmanagementeinheit EM mit dem Bootstrap-Protokollserver BOOTP-S und der Internetprotokolladresse n.n.n, die Bootstrap-Protokollrelaisfunktion BOOTP-R des Netzübergangsprotokollrouters mit der Internetprotokolladresse m.m.m, den Teilnehmeranschlußleitungszugangsmultiplexer DSLAM mit dem Teilnehmeranschlußleitungsport TAL-PRT, die Teilnehmeranschlußleitung TAL sowie die Netzabschlußeinheit IAD. Figur 2b zeigt darüber hinaus eine Endgeräteeinheit EA0 und die diese mit der Netzabschlußeinheit IAD verbindende S0-Schnittstelle S0-0.

In Schritt 1 sendet die Netzabschlußeinheit IAD mit Hilfe einer Broadcast-Funktion eine IP-Adreßanforderungsmeldung BOOT-REQUEST mit der Hardwareadresse a:b:c als eindeutiger Kennung der Netzabschlußeinheit IAD zu der Bootstrap-Protokollrelaisfunktion BOOTP-R.
In Schritt 2 sendet die Bootstrap-Protokollrelaisfunktion BOOTP-R eine IP-Adreßanforderungsmeldung BOOT-REQUEST mit der Hardwareadresse a:b:c und mit ihrer eigenen Internetprotokolladresse m.m.m an die Internetprotokolladresse n.n.n des Netzmanagementsystems NMS, insbesondere zum Bootstrap-Protokollserver BOOTP-S.
In Schritt 3 teilt der Bootstrap-Protokollserver BOOTP-S gemäß einer früheren Konfiguration der Netzabschlußeinheit IAD für die Hardware-Adresse a:b:c die Internetprotokolladresse x.x.x und die Pseudo-Hardwareadressen d:e:0, d:e:1 und d:e:2 als eindeutige Kennungen der Telekommunikationsendgeräteanschlüsse S0-0, S0-1 und S0-2 zu.
In Schritt 4 wird diese Internetprotokolladresse x.x.x mit der Hardwareadresse a:b:c, mit den Pseudo-Hardwareadressen d:e:0, d:e:1 und d:e:2 und zusätzlicher Serverinformation in einer Bootstrap-Protokollantwortmeldung BOOT-REPLY an die Internetprotokolladresse m.m.m der Bootstrap-Protokollrelaisfunktion BOOTP-R übermittelt. Die Bootstrap-Protokollrelaisfunktion BOOTP-R sendet diese empfangene Meldung mit Hilfe einer Broadcast-Übertragung über die virtuelle ATM-Verbindung AAL5 PVC in Schritt 5 an die Netzabschlußeinheit IAD.

In dem Ausführungsbeispiel gemäß den Figuren 2a und 2b wird davon ausgegangen, daß daraufhin die Netzabschlußeinheit IAD für jede der Endgeräteeinheiten EA0, EA1 und EA2 die IP-Adresse anfordert und diese IP-Adressen den jeweiligen Endgeräteeinheiten übermittelt. Figur 2b zeigt diesen Ablauf für die Endgeräteeinheit EA0. Selbstverständlich kann aber auch in einem anderen, nicht explizit dargestellten Ausführungsbeispiel eines erfindungsgemäßen Verfahrens die Netzabschlußeinheit IAD an die Endgeräteeinheiten EA0, EA1 und EA2 nach Schritt 5 des Ablaufs nach Figur 2a jeweils die Pseudo-Hardwareadresse d:e:0, d:e:1 bzw. d:e:2 der ihnen zugeordneten Telekommunikationsendgeräteanschlüsse S0-0, S0-1 und S0-2 übermitteln und jede der Endgeräteeinheiten EA0, EA1 und EA2 könnte für sich entsprechend dem Ablauf der vorstehend für die Netzabschlußeinheit beschriebenen Schritte 1 bis 5 unter Verwendung der entsprechenden Pseudo-Hardwareadresse d:e:0, d:e:1 bzw. d:e:2 eine IP-Adreßanforderungsmeldung BOOT-REQUEST absenden.

In Schritt 6 sendet die Netzabschlußeinheit IAD mit Hilfe einer Broadcast-Funktion eine IP-Adreßanforderungsmeldung BOOT-REQUEST mit der Pseudo-Hardwareadresse d:e:0 als eindeutige Kennung des Telekommunikationsendgeräteanschlusses S0-0 und somit der Endgeräteeinheit EA0 und mit ihrer eigenen Internetprotokolladresse x.x.x zu der Bootstrap-Protokollrelaisfunktion BOOTP-R. Falls die Netzabschlußeinheit IAD die IP-Adresse n.n.n des Bootstrap-Protokollserver BOOTP-S zur Verfügung hat, könnte die Anfrage auch gezielt an den Bootstrap-Protokollserver BOOTP-S abgesendet werden. Der Ablauf gemäß Schritt 6 erfordert jedoch weniger Änderungen an existierenden Protokollen. Auch das Senden der IP-Adresse x.x.x der Netzabschlußeinheit IAD ist für die Durchführung des Verfahrens nicht zwingend erforderlich, sondern optional. Durch die Übermittlung dieser IP-Adresse x.x.x kann auf die in Schritt 5 des Ablaufs nach der Figur 2a verwendete Broadcast-Funktion für das Zustellen der erwarteten Bootstrap-Protokollantwortmeldung BOOT-REPLY an die Netzabschlußeinheit IAD verzichtet werden. In Schritt 7 sendet die Bootstrap-Protokollrelaisfunktion BOOTP-R eine IP-Adreßanforderungsmeldung BOOT-REQUEST mit der Pseudo-Hardwareadresse d:e:0, mit ihrer eigenen Internetprotokolladresse m.m.m und optional mit der IP-Adresse x.x.x der Netzabschlußeinheit IAD an die Internetprotokolladresse n.n.n des Netzmanagementsystems NMS, insbesondere zum Bootstrap-Protokollserver BOOTP-S.
In Schritt 8 teilt der Bootstrap-Protokollserver BOOTP-S dem Telekommunikationsendgeräteanschluß S0-0 und somit der Endgeräteeinheit EA0 für die Hardware-Adresse d:e:0 die Internetprotokolladresse y.y.0 zu.
In Schritt 9 wird diese Internetprotokolladresse y.y.0 mit der Pseudo-Hardwareadressen d:e:0, zusätzlicher Serverinformation und optional mit der IP-Adresse x.x.x der Netzabschlußeinheit IAD in einer Bootstrap-Protokollantwortmeldung BOOT-REPLY an die Internetprotokolladresse m.m.m der Bootstrap-Protokollrelaisfunktion BOOTP-R übermittelt. Die Bootstrap-Protokollrelaisfunktion BOOTP-R sendet diese empfangene Meldung in Schritt 10 an die Netzabschlußeinheit IAD.
In Schritt 11 übermittelt die Netzabschlußeinheit IAD die IP-Adresse y.y.0 über den Telekommunikationsendgeräteanschluß S0-0 zur Endgeräteeinheit EA0

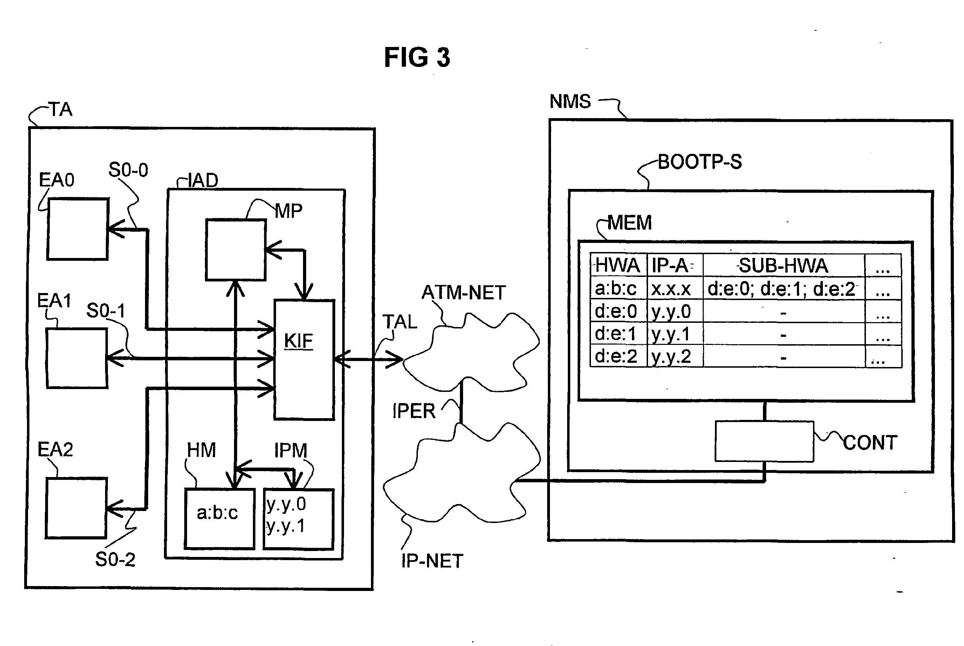

Figur 3 zeigt ein teilnehmerseitiges Subnetzes TA, das wie in Figur 1 eine Netzabschlüßeinheit IAD enthält und drei Endgeräteeinheiten EA0, EA1 und EA2, die jeweils über eine S0-Schnittstelle S0-0, S0-1, S0-2 mit der Netzabschlußeinheit IAD verbunden sind. In der Netzabschlußeinheit IAD in Figur 3 ist außerdem eine Kommunikationsschnittstelle KIF dargestellt, an die eine Teilnehmeranschlußleitung TAL angeschlossen ist und die drei S0-Schnittstellen S0-0, S0-1 und S0-2 zum Anschließen der Endgeräteeinheiten EA0, EA1 und EA2 hat. Darüber hinaus steht die Kommunikationsschnittstelle KIF mit einer Steuereinheit MP in Verbindung. Die Kommunikations - schnittstelle KIF hat die Aufgabe, auf der Teilnehmeranschlußleitung TAL empfangene Informationen und Befehle an die S0-Schnittstellen S0-0, S0-1 und S0-2 und and die Steuereinheit MP weiterzuleiten, die diese Informationen bzw. Befehle verarbeiten können. Hierzu erforderliche Formatumwandlungen und Demultiplexvorgänge werden von der Kommunikationsschnittstelle KIF ausgeführt. In gleicher Weise soll die Kommunikationsschnittstelle KIF von der Steuereinheit MP oder über die einzelnen S0-Schnittstellen S0-0, S0-1 und S0-2 empfangene Informationen oder Befehle gegebenenfalls multiplexen und in ihrem Format umformen, so daß diese auf der Teilnehmeranschlußleitung TAL zu einem in der Figur 3 nur schematisch dargestellten Telekommunikationsnetz ATM-NET übertragen zu können. Die Steuereinheit MP der Netzabschlußeinheit IAD, die üblicherweise durch eine Prozessoreinheit mit entsprechenden Programmbefehlen realisiert wird, steuert die Kommunikationsschnittstelle KIF und steht in Leseverbindung mit einem Hardwareadreßspeicher HM, in dem eine Hardwareadresse a:b:c gespeichert ist. Außerdem steht die Steuereinheit MP in Schreib/Leseverbindung mit einem Speichereinrichtung IPM zum speichern von IP-Adressen y.y.0, y.y.1 und (nicht dargestellt) y.y.2 der an den S0-Schnittstellen S0-0, S0-1 und S0-2 angeschlossenen Endgeräteeinheiten EA0, EA1 und EA2. Diese Speichereinrichtung IPM kann hierbei auch bedarfsweise zum Speichern der den S0-Schnittstellen S0-0, S0-1 und S0-2 zugeordneten Pseudo-Hardwareadressen d:e:0, d:e:1 und d:e:2 vorgesehen sein.

Wie bereits erwähnt, ist das in Figur 3 gezeigte teilnehmerseitige Subnetz TA über eine Teilnehmeranschlußleitung TAL an ein Telekommunikationsnetz ATM-NET angeschlossen. Dieses Telekommunikationsnetz ATM-NET ist über einen als Verbindungslinie dargestellten Netzübergangsinternetprotokollrouter IPER in ein Internetprotokollnetz IP-NET integriert, das von einem
Netzmanagementsystem NMS des Internetprotokollnetzes IP-NET gesteuert und verwaltet wird. Ein solches Netzmanagementsystem NMS ist entsprechend der Darstellung und Beschreibung von Figur 1 ausgestaltet, obwohl in Figur 3 nur ein Bootstrap-Protokollserver BOOTP-S als Netzmanagementeinheit zum Zuweisen von IP-Adressen gezeigt ist. Der Bootstrap-Protokollserver BOOTP-S enthält eine Steuereinheit CONT zum Steuern der IP-Adressverwaltung und eine Speicheranordnung MEM zum zugeordneten Speichern von Kennungen HWA, wie der Hardwareadresse a:b:c oder den Pseudo-Hardwareadressen d:e:0, d:e:1 oder d:e:2, von IP-Adressen IP-A wie x.x.x, y.y.0, y.y.1 oder y.y.2, von nachgeordneten Pseudo-Hardwareadressen SUB-HWA wie d:e:0; d:e:1; d:e:2 und von weiterer, nur als Punkte dargestellter Information, wie zum Beispiel Gateway-Information oder Server-Information.

Wenn die Erfindung vorstehend für den Fall des Internetprotokollnetzes und der IP-Adressauflösung beschrieben wurde, ist dies nur beispielhaft und nicht einschränken zu verstehen. Dem Fachmann erschließen sich aus dieser Beschreibung der vorliegenden Erfindung unmittelbar viele Ausgestaltungen und Abwandlungen im Rahmen des Schutzbereichs der Patentansprüche.

## Patentansprüche

1. Verfahren zum Ermitteln einer virtuellen Adresse, die einer teilnehmerseitigen Endgeräteeinheit (EAO) eindeutig zugeordnet ist, wobei die Endgeräteeinheit
- an ein virtuelles Netz (ATM/SDH, DSLAM, TAL, IPER, IPR1, IPR2, IPR3, NMS)
- über eine teilnehmerseitige Netzabschlußeinheit (IAD) einer Teilnehmeranschlußleitung (TAL) des virtuellen Netzes und
- einem der Netzabschlußeinheit nachgeordneten Endgeräteanschluß (S0-0) angeschlossen ist,
mit folgenden Schritten:
(1) Senden einer ersten Adreßanforderungsmeldung (BOOT-REQUEST/ a:b:c) von der Netzabschlußeinheit mit einer eindeutigen ersten Kennung (a:b:c) der Netzabschlußeinheit an eine Netzmanagementeinheit (BOOTP-S) zum Zuweisen von virtuellen Adressen, um eine erste virtuelle Adresse (x.x.x) anzufordern, die der Netzabschlußeinheit eindeutig zugeordnet ist;
(2) Zuweisen der ersten virtuellen Adresse unter Verwendung der ersten Kennung durch die Netzmanagementeinheit;
(3) Senden der ersten virtuellen Adresse und einer eindeutigen zweiten Kennung (d:e:0) des Endgeräteanschlusses von der Netzmanagementeinheit zur Netzabschlußeinheit;
(4) Senden einer zweiten Adreßanforderungsmeldung (BOOT-REQUEST/ d:e:0) mit der zweiten Kennung von der Netzabschlußeinheit oder - sofern die zweite Kennung zuvor zur Endgeräteeinheit übermittelt wird - von der Endgeräteeinheit an die Netzmanagementeinheit;
(5) Zuweisen einer zweiten virtuellen Adresse (y.y.0) des Endgeräteanschlusses unter Verwendung der zweiten Kennung durch die Netzmanagementeinheit;
(6) Senden der zweiten virtuellen Adresse von der Netzmanagementeinheit zu dem Absender der zweiten Adreßanforderung und Übermitteln der zweiten virtuellen Adresse an die Endgeräteeinheit, falls die zweite Adreßanforderung von der Netzabschlusseinheit abgesendet wurde;
(7) Übernehmen der zweiten virtuellen Adresse als virtuelle Adresse für die Endgeräteeinheit.

2. Verfahren nach Anspruch 1,
bei dem die erste eindeutige Kennung als Hardware-MAC-Adresse der Netzabschlußeinheit ausgebildet ist.

3. Verfahren nach Anspruch 1,
bei dem bei einer Netzabschlußeinheit, die ein zu dem virtuellen Netz gehörendes Telekommunikationsnetz (ATM/SDH, DSLAM, TAL, IPER) mit Teilnehmeranschlüssen abschließt, die erste eindeutige Kennung als Pseudo-Hardwareadresse des Teilnehmeranschlusses der Netzabschlußeinheit ausgebildet ist.

4. Verfahren nach Anspruch 3,
bei dem die erste eindeutige Kennung beim Konfigurieren des zugeordneten Teilnehmeranschlusses in einem netzseitigen Peripheriebereich (DSLAM; IAD) des Telekommunikationsnetzes gespeichert und beim Initialisieren der Netzabschlußeinheit über die Teilnehmeranschlußleitung zur Netzabschlußeinheit übermittelt wird.

5. Verfahren nach einem der vorhergehenden Ansprüche,
bei dem bei einem als Telekommunikationsendgeräteanschluß ausgebildeten Endgeräteanschluß die zweite eindeutige Kennung des Telekommunikationsendgeräteanschlusses eine ihm zugeordnete Pseudo-Hardwareadresse ist, die zusätzlich zur ersten virtuellen Adresse als zur ersten eindeutigen Kennung der Netzabschlußeinheit gehörig in der Netzmanagementeinheit gespeichert ist.

6. Verfahren nach einem der vorhergehenden Ansprüche,
bei dem mehrere zweite eindeutige Kennungen (d:e:0; d:e:1; d:e:2) entsprechender Endgeräteanschlüsse (S0-0; S0-1; S0-2) von der Netzmanagementeinheit zur Netzabschlußeinheit gesendet werden und für jeden der Endgeräteanschlüsse eine Adreßanforderungsmeldung (BOOT-REQUEST) mit der zweiten eindeutigen Kennung des jeweiligen Endgeräteanschlusses an die Netzmanagementeinheit gesendet wird.

7. Produkt,umfassend Mittel zur vollständigen Durchführung eines verfahrens nach einem der verfahrensansprüche.

8. Produkt nach Anspruch 7, umfassend zumindest ein Computerprogramm.

## Claims

1. Method for determining a virtual address that is uniquely assigned to a subscriber-side terminal unit (EAO), with the terminal unit being connected to
- a virtual network (ATM/SDH, DSLAM, TAL, IPER, IPR1, IPR2, IPR3, NMS)
- via a subscriber-side network termination unit (IAD) of a subscriber line (TAL) of the virtual network and
- to a terminal connection (S0-0) downstream of this network termination unit,
comprising the following steps:
(1)Sending a first address request message (boot request/a:b:c) from the network termination unit with a unique first identifier (a.b.c) of the network termination unit to a network management unit (BOOTP-S) to assign virtual addresses in order to request a first virtual address (x.x.x) which is assigned to the network termination unit;
(2)Assigning the first virtual address using the first identifier by the network management unit,
(3)Sending the first virtual address and a unique second identifier (d:e:0) of the terminal connection from the network management unit to the network termination unit;
(4)Sending a second address request message (boot request/d:e:0) with the second identifier from the network termination unit, or, provided the second identifier is previously transmitted to the terminal unit, from the terminal unit to the network management unit;
(5)Assigning a second virtual address (y.y.0) of the terminal connection using the second identifier by the network management unit;
(6)Sending the second virtual address from the network management unit to the sender of the second address request and transmitting the second virtual address to the terminal unit if the second address request was sent from the network termination unit;
(7)Accepting the second virtual address as the virtual address for the terminal unit.

2. Method according to claim 1
in which the first unique identifier is embodied as a Hardware MAC address of the network termination unit.

3. Method according to claim 1,
in which in a network termination unit, which terminates a telecommunication network (ATM/SDH, DSLAM, TAL, IPER) forming part of the virtual network to subscriber terminals, the first unique identifier is embodied as a pseudo hardware address of the subscriber terminal of the network termination unit.

4. Method according to claim 3, in which the first unique identifier is stored in a network-side peripheral area (DSLAM; IAD) of the telecommunications network when the subscriber line assigned thereto is configured and is transmitted via the subscriber line (TAL) to the network termination unit (IAD) when the network termination unit (IAD) is initialised.

5. Method according to one of the above claims, in which in a terminal connection embodied as a telecommunication terminal connection, the second unique identifier of the telecommunication terminal connection is a pseudo-hardware address assigned to it that is stored in addition to the first virtual address and to the first unique identifier of the network termination unit in the network management unit.

6. Method according to one of the above claims, in which several second unique identifiers (d:e:0; d:e:1; d:e:2) of the appropriate terminal connections (S0-0; S0-1; S0-2) are sent from the network management unit to the network termination unit and for each of these terminal connections, an address request message (boot request) with the unique second identifier of the respective terminal connection is sent to the network management unit.

7. Product comprising means for completely implementing a method according to one of the method claims.

8. Product according to claim 7, comprising at least one computer program.

## Revendications

1. Procédé pour déterminer une adresse virtuelle, qui est attribuée univoquement à un terminal côté abonné (EAO), le terminal
- étant raccordé à un réseau virtuel (ATM/SDH, DSLAM, TAL, IPER, IPR1, IPR2, IPR3, NMS),
- par une unité de terminaison de réseau côté abonné (IAD) d'une ligne de raccordement d'abonné (TAL) du réseau virtuel et
- par un raccordement de terminal (SO-0) placé en aval de l'unité de terminaison de réseau,
comprenant les étapes suivantes :
(1) envoi d'un premier message de demande d'adresse (BOOT-REQUEST/a:b:c) de l'unité de terminaison de réseau avec un premier code (a:b:c) univoque de l'unité de terminaison de réseau à une unité de gestion de réseau (BOOTP-S) pour l'attribution d'adresses virtuelles, afin de demander une première adresse virtuelle (x.x.x), qui est attribuée univoquement à l'unité de terminaison de réseau ;
(2) attribution de la première adresse virtuelle avec l'utilisation du premier code par l'unité de gestion de réseau ;
(3) envoi de la première adresse virtuelle et d'un second code (d:e:0) univoque du raccordement de terminal de l'unité de gestion de réseau à l'unité de terminaison de réseau ;
(4) envoi d'un second message de demande d'adresse (BOOT-REQUEST/d:e:0) avec le second code de l'unité de terminaison de réseau ou - si le second code est transmis auparavant au terminal - du terminal à l'unité de gestion de réseau ;
(5) attribution d'une seconde adresse virtuelle (y.y.0) du raccordement de terminal avec l'utilisation du second code par l'unité de gestion de réseau ;
(6) envoi de la seconde adresse virtuelle de l'unité de gestion de réseau à l'expéditeur de la seconde demande d'adresse et transmission de la seconde adresse virtuelle au terminal, si la seconde demande d'adresse a été envoyée par l'unité de terminaison de réseau ;
(7) prise en charge de la seconde adresse virtuelle comme adresse virtuelle pour le terminal.

2. Procédé selon la revendication 1,
dans lequel le premier code univoque est conçu sous forme d'adresse MAC de matériel de l'unité de terminaison de réseau.

3. Procédé selon la revendication 1,
dans lequel, sur une unité de terminaison de réseau, qui termine un réseau de télécommunication (ATM/SDH, DSLAM, TAL, IPER) appartenant au réseau virtuel avec des branchements d'abonné, le premier code univoque est conçu sous forme de pseudo-adresse de matériel du branchement d'abonné de l'unité de terminaison de réseau.

4. Procédé selon la revendication 3,
dans lequel le premier code univoque est stocké lors de la configuration du raccordement d'abonné attribué dans une zone périphérique côté réseau (DSLAM ; IAD) du réseau de télécommunications et est transmis lors de l'initialisation de l'unité de terminaison de réseau par la ligne de raccordement d'abonné à l'unité de terminaison de réseau.

5. Procédé selon l'une quelconque des revendications précédentes,
dans lequel, lors d'un raccordement de terminal conçu comme un raccordement de terminal de télécommunication, le second code univoque du raccordement de terminal de télécommunication est une pseudo-adresse de matériel qui lui est attribuée, qui est stockée en supplément de la première adresse virtuelle comme faisant partie du premier code univoque de l'unité de terminaison de réseau dans l'unité de gestion de réseau.

6. Procédé selon l'une quelconque des revendications précédentes,
dans lequel plusieurs seconds codes (d:e:0 ; d:e:1 ; d:e:2) univoques de raccordements de terminal correspondants (S0-0 ; S0-1 ; S0-2) sont envoyés de l'unité de gestion de réseau à l'unité de terminaison de réseau et, pour chacun des raccordements de terminal, un message de demande d'adresse (BOOT-REQUEST) est envoyé avec le second code univoque du raccordement de terminal respectif à l'unité de gestion de réseau.

7. Produit, comprenant des moyens pour la mise en oeuvre complète d'un procédé selon 1"une quelconque des revendications de procédés.

8. Produit selon la revendication 7, comprenant au moins un programme informatique.
